Europäisches Patentamt

European Patent Office

Office européen des brevets

(19)

(11) Veröffentlichungsnummer : **0 189 545**
**B1**

(12) **EUROPÄISCHE PATENTSCHRIFT**

(45) Veröffentlichungstag der Patentschrift :
06.07.88

(51) Int. Cl.⁴ : **F 02 K   7/18**

(21) Anmeldenummer : **85114883.3**

(22) Anmeldetag : **23.11.85**

(54) **Luftatmender Feststoff-Staustrahlantrieb.**

(30) Priorität : **26.01.85 DE 3502673**

(43) Veröffentlichungstag der Anmeldung :
**06.08.86 Patentblatt 86/32**

(45) Bekanntmachung des Hinweises auf die Patenterteilung : **06.07.88 Patentblatt 88/27**

(84) Benannte Vertragsstaaten :
**DE FR GB**

(56) Entgegenhaltungen :
**DE-A- 2 459 001**
**US-A- 2 999 672**
**US-A- 3 221 497**
**US-A- 3 807 169**
**US-A- 4 063 415**

(73) Patentinhaber : **Rheinmetall GmbH**
**Ulmenstrasse 125 Postfach 6609**
**D-4000 Düsseldorf (DE)**

(72) Erfinder : **Moll, Manfred, Dipl.-Ing.**
**Kehlerstrasse 27**
**D-4000 Düsseldorf 30 (DE)**

(74) Vertreter : **Behrens, Ralf Holger, Dipl.-Phys.**
**in Firma Rheinmetall GmbH T-2 Patentabteilung**
**Ulmenstrasse 125, Postfach 6609**
**D-4000 Düsseldorf 1 (DE)**

## Beschreibung

Die Erfindung betrifft einen luftatmenden Feststoff-Staustrahlantrieb nach dem Oberbegriff des Patentanspruchs 1.

Bei einem derartigen aus der DE-A-3 104 680 bekannten Staustrahlantrieb enthält ein rohrartiger Bereich eines von der Düse einer ersten Brennkammer ausgehenden Brenngasinjektors eine Vielzahl seitlicher Öffnungen, durch die aus Einlaufdiffusorrohren in die zweite Brennkammer geführte Luft in radialer Richtung angesaugt wird. Die über die seitlichen Öffnungen angesaugte Luft kann sich jedoch, einen zentral ausgebildeten Gasstrahl umhüllend, nur an den Innenflächen des Brenngasinjektors mit den dort vorhandenen turbulenten heißen Gasen vermischen, so daß die angesaugte Luft lediglich dem Anteil der turbulen-ten Gase für die Verbrennung zur Verfügung steht. Die im Überschallteil erzeugte hohe Gasgeschwindigkeit des zentralen Strahls verhindert im wesentlichen die Vermischung mit der nur eine relativ geringe Geschwindigkeit aufweisenden Luft innerhalb des Injektors. Dadurch ist mit diesem Brenngasinjektor keine für eine stöchimetrische Verbrennung der aus einem Festtreibstoff mit Metall-, vorzugsweise Aluminiumzusätzen, gebildeten Generatorgase notwendige Luftzufuhr und Vermischung für eine sichere Zündung und Verbrennung der Gase, insbesondere der die Verbrennungstemperatur wesentlich steigernden Metallzusätze erzielbar, so daß innerhalb der zweiten Brennkammer, bei einem direkt von dem Einlaufdiffusor zugeführten hohen Sekundärluf-tanteil, beispielsweise bei einem Massenstromver-hältnis $m_L/m_G$ von bereits 30 : 1, entsprechend einem achtfachen Luftüberschuß, die Gefahr besteht, daß die Generatorgasflamme ausgeht bzw. nur ein unzureichender Verbrennungswirkungsgrad erzielt wird.

Des weiteren ist der vorhandene Überschallteil der Düse nur für reine Festtreibstoffe ohne Metallzusatz geeignet, weil die im expandierenden Gasstrahl vorhandenen Metalle im Überschallteil auskondensieren, sich ablagern und die Düse verstopfen würden.

Die radiale Lage der Lufteinlaßöffnungen in den Brenngasinjektor hat des weiteren den Nachteil, daß der Impuls der in den Brenngasinjektor einströmenden Luft für die Schubunterstützung nicht zur Verfügung steht.

Demgegenüber ist es Aufgabe der Erfindung, den im Oberbegriff des Patentanspruchs 1 genannten Brenngasinjektor derartig zu verbessern, daß eine im wesentlichen impulsverlustfreie und dem stöchiometrischen Bedarf der Generatorgase entsprechende Luftzufuhr erzielt wird sowie innerhalb des Injektors eine gleichmäßige, vollständige und schnelle Verbrennung auch bei mit metallischen, insbesondere Al-Zusätzen verse-nen und eine hohe Zündtemperatur aufweisenden aus Festtreibstoffen produzierten Generatorgasen eingeleitet wird. Des weiteren soll der Brenngasinjektor vergleichsweise raumsparend innerhalb

der zweiten Brennkammer angeordnet sein.

Gelöst wird diese Aufgabe durch die im Patentanspruch 1 angegebene Erfindung. Vorteilhafte Ausgestaltungen und Weiterbildungen der Erfindung gehen aus den Unteransprüchen hervor.

Durch die Erfindung werden in vorteilhafter Weise, aufgrund eines ringförmigen Lufteintritkka-nals, axial gerichtete Impulsverluste der einströmenden Luft weitgehend vermieden und somit eine Geschwindigkeitserhöhung des schuberzeugenden den Gases sowie eine Verbesserung der Schubwirkung erzielt.

Obwohl die radiale Ablenkung der weitgehend axial gerichteten ringförmig in den Brenngasinjektor eintretenden Luft in vorteilhafter Weise minimal ist, wird durch das Aufeinandertreffen mit dem durch den kegelförmig an der Generatordüse abreißenden Gasstrahl eine sofortige Vermischung des gesamten an der Düse ausströmenden Gases mit der Luft erzielt. Der Querschnitt des Luftaustrittkanals ist dabei derartig bemessen, daß eine der stöchiometrischen Verbrennung notwendige Luftzufuhr gewährleistet ist. Dadurch wird sichergestellt, daß bei aus Festtreibstoffen mit Metall-, insbesondere Al-Zusätzen erzeugten Generatorgasen die zur Verbrennung von insbe-sondere Al-Zusätzen und der damit erzielbaren weiteren Temperaturerhöhung notwendige Mindesttemperatur von 2 300 °K sicher erreicht wird. Dadurch wird ein bei sinkenden Verbrennungstemperaturen kleiner 2 300 °K ebenfalls abneh-mender Verbrennungswirkungsgrad des Genera-torgases und eine damit verbundene Verminderung der Schubleistung des Flugkörpers vermieden.

Dadurch, daß zwischen dem Düsenausgang und der inneren Öffnung des Lufteintrittkanals ein Überschallteil (Lavaldüse) fehlt, kann sich der Gasstrahl ohne Bildung von Metallrückständen kegelförmig entspannen, wodurch weiter vorteilhaft eine gleichmäßige und vollkommene Vermischung mit der in den Brenngasinjektor einströmenden Luft erzeugt wird.

Die heckseitige Länge des Brenngasinjektors kann in Abhängigkeit der Korngröße, beispiels-weise der Al-Teilchen, vergleichsweise kurz aus-geführt werden, zumal nach der Zündung und dem Beginn der Verbrennung die weitere Abreaktion mit der Verbrennung in der zweiten Staustrahlbrennkammer erfolgen kann.

Dadurch, daß der äußere Mantel am Ausgang des Lufteintrittkanals ebenfalls mit einer Schrägfläche versehen sein kann und der für die Vermischung, Zündung und Einleitung der Verbrennung vorgesehene heckseitige Gehäuseabschnitt einen kleineren Außendurchmesser als der Lufteintrittkanal aufweist, ergeben sich den Verbrennungsraum der zweiten Brennkammer bzw. den Sekundärlufteinstömkanal in die zweite Brennkammer vorteilhaft vergrößernde, besonders im Durchmesser aber auch in der Länge raumsparende Brenngasinjektoren.

Der in verschiedenen einfachen Ausgestaltungsformen herstellbare Brenngasinjektor ist aus einem hochwarmfesten Metall bzw. einer Metallegierung, vorzugsweise aus 100 % Wolfram oder Molybdän oder einer aus beiden Metallen bestehenden Legierung hergestellt, wodurch vorteilhaft hohe Verbrennungstemperaturen, ·beispielsweise beim Einsatz von Wolfram bis 3 600 °K, im Brenngasinjektor erzielt werden können.

Die Erfindung wird anhand der in den Zeichungen dargestellten Ausführungsbeispiele des näheren erläutert.

Es zeigt,

Fig. 1 in einem Längsschnitt einen Flugkörper mit einem seitlichen Lufteinlaßdiffusor und einem zwischen einem Gasgenerator und einer zweiten Brennkammer angeordneten Brenngasinjektor ;

Fig. 2 in einer Ausschnittsvergrößerung der Fig. 1, den an der Austrittsdüse des Gasgenerators befestigten Brenngasinjektor ;

Fig. 3-6 in verschiedenen Schnittdarstellungen unterschiedlicher Ausführungsformen des Lufteintrittkanals und des heckseitigen Teil des Brenngasinjektors ;

Fig. 7 in einem Teilschnitt entlang der in Fig. 5 mit VII-VII angegebenen Schnittfläche die Befestigung des äußeren mit dem inneren Mantel des Brenngasinjektors im Bereich des Lufteintrittkanals ;

Fig. 8 in einer Schnittdarstellung entlang der in Fig. 6 VIII-VIII angegebenen Fläche die Anordnung· mehrfach im Querschnitt des Luftkanals gleichmäßig verteilter befestigungsstäbe des äußeren Mantels.

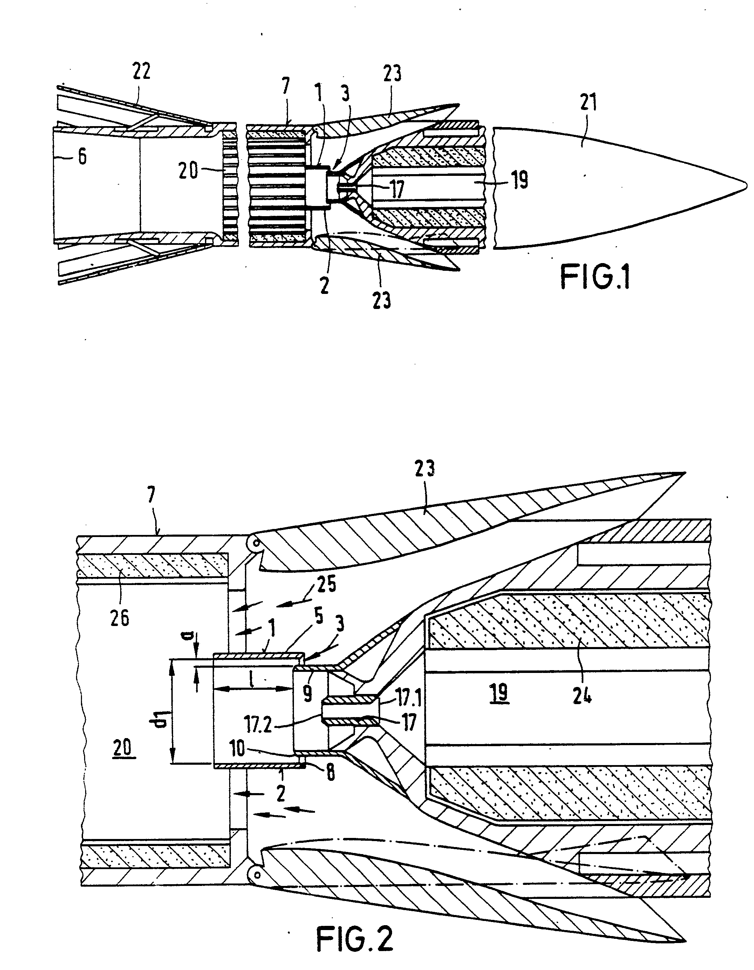

Die Figuren 1 und 2 verdeutlichen im einzelnen den Aufbau eines eine erste Brennkammer 19 und eine zweite Brennkammer 20 enthaltenden luftatmenden Feststoff- Staustrahlantriebes innerhalb eines aus einem nicht dargestellten Waffenrohr abfeuerbaren oder von einem ebenfalls nicht dargestellten Flugkörperträger abwerfbaren Flugkörpers 7. Der Staustrahlantrieb ist zwischen einem vorderen Teil 21 des Flugkörpers 7, der einen nicht näher beschriebenen Suchkopf, eine Lenkeinheit und wenigstens ein Wirkteil enthält, und einem ein einklappbares Leitwerk 22 aufnehmenden Heck 6 angeordnet.

Die für den Betrieb des Staustrahltriebwerkes benötigte Luft kann entweder durch einen nicht dargestellten, beispielsweise zentral im Geschoßkopf angeordneten Einlaufdiffusor oder, wie in den Figuren 1 und 2 dargestellt, durch mehrere in den Flugkörper 7 einklappbare Seiteneinläufe 23 aufgefangen und verdichtet werden. Zur vollständigen Vermischung und einer möglichst schnellen und vollständigen Reaktion der aus einer Düse 17 der Primärbrennkammer 19 austretenden Generatorgase mit einem Teil der über den Diffusor aufgefangenen Luft, ist ein in die zweite Brennkammer 20 hineinragender am rückseitigen Ende geöffneter Brenngasinjektor 1 mit der Düse 17 verbunden.

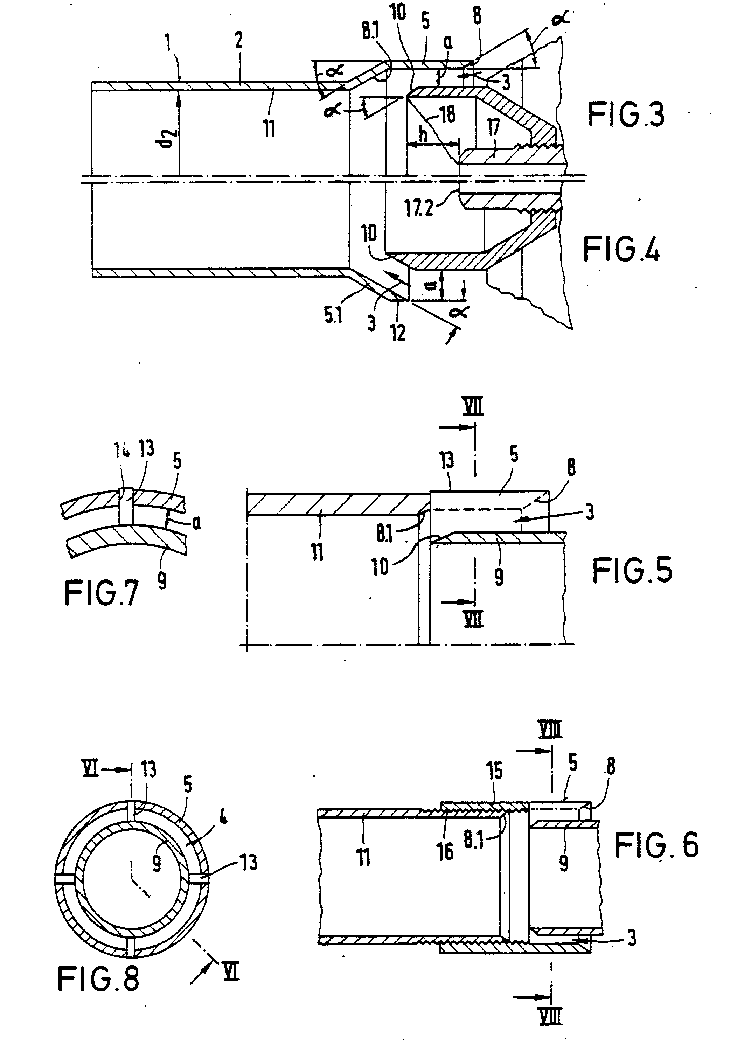

Die Verbindungsstelle des Brenngasinjektors 1 mit der einen Schallquerschnitt aufweisenden Düse 17 liegt zwischen dem vorderen Düseneingang 17.1 und dem heckseitigen Düsenausgang 17.2. Ausgehend von der Düse 17 weitet sich das Gehäuse 2 des Brenngasinjektors 1 kegelstumpfförmig auf, um in einen zylinderrohrförmig ausgebildeten Gehäuseabschnitt überzugehen, dessen vorderhälftiger Bereich in einem radialen Abstand a überlappt angeordnet ist und einen nach vorn geöffneten Lufteintrittkanal 3 aufweist. Der Lufteintrittkanal 3 enthält einen in Fig. 8 dargestellten, dem stöchiometrischen Bedarf der Generatorgase entsprechenden ringförmigen Querschnitt 4, der durch einen äußeren und inneren Mantel 5, 9 begrenzt ist.

Unter weitgehender Aufrechterhaltung einer axialen Lufteinströmung in den Lufteintrittkanal 3, enthält, der äußere Mantel 5 im überlappten Gehäusebereich wenigstens eine zum Heck 6 des Flugkörpers 7 hin sich innenseitig einschnürende, kegelförmige Schrägfläche 8. Zu dem gleichen Zweck enthält der direkt mit der Düse 17 verbundene innere Mantel 9 an seinem heckseitigen Ende, also am Ausgang des Lufteintrittkanals 3, eine außenseitig angeordnete, zum Heck 6 hin den Kanalquerschnitt 4 vergrößernde Schrägfläche 10. Die Spitze dieser Schrägfläche 10 des inneren Mantels 9 ist gegenüber dem Düsenausgang 17.2 der Düse 17, entsprechend einer axialen Höhe h eines an der Düse 17 kegelförmig aufreißenden Gasstrahles 18 (Fig. 3), heckseitig zurückversetzt.

Durch den Brenngasinjektor 1 wird in besonders vorteilhafter Weise ein den Verbrennungswirkungsgrad der Generatorgase erhöhender Verbrennungsablauf erzielt. Dabei wird das durch die teilweise Zersetzung eines Treibsatzes 24 erzeugte Brennstoffgas innerhalb der Primärbrennkammer 19 durch den Brennkammerdruck über die Schalldüse 17 gesteuert und entspannt sich entsprechend dem kegelförmig aufreißenden Gasstrahl 18, ·um sich anschließend aufgrund des ringförmigen Lufteintrittkanals 3 schnell und vollständig mit der zugeführten Luft zu vermischen. Durch die mit den Generatorgasen über den Querschnitt 4 (Fig. 8) des Lufteintrittkanals 3 abgestimmte stöchiometrische Luftzufuhr wird in vorteilhafter Weise ein zur Erreichung der Zündtemperatur, beispielsweise von Generatorgasen mit 10 % $A_L$-Zusätzen, enger Bereich des Mischungsverhältnisses mit der Stauluft $2,5 < m_L/m_G < 4,2$ sicher erreicht, wobei sich bei einem stöchiometrischen Mischungsverhältnis $m_L/m_G = 4$ annähernd maximale Verbrennungstemperaturen von 2 450 °K oberhalb des Schmelzpunktes von $Al_2O_3$ von 2 300 °K einstellen. In Abhängigkeit von einer günstigen Zündverzugszeit lassen sich vergleichsweise axial kurze Mischungslängen 1, auch im Längenbereich kleiner $d_1$, erzielen, wobei die vollständig innerhalb des Injektors 1 gezündeten Generatorgase nach Verlassen des dem Durchmesser $d_1$ entsprechenden äußeren Mantels 5 in der als Hauptbrennkammer ausgebildeten zweiten Brennkammer 20 weiterbrennen und gmeinsam mit dem über den Seiteneinlauf 23 angesaugten Sekundärluftstrom

eine sichere Anzündung des in der zweiten Brennkammer 20 befindlichen Brandsatzes 26 gewährleisten.

In den Figuren 3 und 4 werden unter Berücksichtigung des benötigten Raumbedarfs für die Sekundärluftzufuhr und die Verbrennung des zweiten Brennsatzes 26 platzsparende Brenngasinjektoren 1 mit verschiedenen Lufteintrittskanälen 3 dargestellt.

Fig. 3 verdeutlicht, daß der äußere Mantel 5 am Ausgang des Lufteintrittkanals 3 mit einer der Schrägfläche 10 gegenüberliegenden zweiten, zum Heck 6 hin sich verjüngenden Schrägfläche 8.1 versehen ist, deren kleinster Durchmesser $d_2$ dem bis zum heckseitigen Ende des Brenngasinjektors 1 reichenden Gehäuseabschnitt 11 des äußeren Mantels 5 entspricht. Der äußere Mantel 5 des Gehäuses 2 besteht dabei aus einem einstückigen an der Schrägfläche 8.1 ausgehalsten Rohr.

Die Schrägflächen 8, 8.1 und 10 des Brenngasinjektors 1 sind dabei unter einem gegenüber dem achsparallelen Mantel 5,9 gering geneigten Winkel α in einem Winkelbereich, vorzugsweise zwischen 3 und 30°, maximal bis 45° angeordnet.

Gemäß Fig. 4 liegt zur Bildung eines ausschließlich schrägen Lufteintrittkanals 3 der überlappende äußere Gehäusebereich als schräger Mantelabschnitt 5.1 direkt der Schrägfläche 10 gegenüber und ist ebenfalls unter einem Winkel α geneigt angeordnet, wobei die nach vorn gerichtete Mantelabschnittsspitze 12 außenseitig einen achsparallelen Verlauf aufweist.

Fig. 5 verdeutlicht eine besonders einfache Herstellmöglichkeit des äußeren Mantels 5 des Gehäuses 2, wobei das Rohr lediglich innenseitig an den Schrägflächen 8, 8.1 abgesetzt ist. Eine weitere einfach herstellbare und raumsparende Anordnung des Brenngasinjektors 1 ist in Fig. 6 dargestellt. Dabei ist der äußere Mantel 5 im überlappenden Bereich als Muffe 15 ausgebildet und am vorderen Ende mit der Schrägfläche 8 und heckseitig mit einem Innengewinde 16 versehen, wodurch der mit einer Schrägfläche 8.1 versehene heckseitige Gehäuseabschnitt 11 anschraubbar verbunden ist.

Der äußere Mantel 5 des Gehäuses 2 ist entsprechend den Fig. 7 und 8 im überlappten Bereich über mehrfach am Umfang gleichmäßig verteilt angeordneter Stege 13 mit dem inneren Mantel 9 unlösbar verbunden, wobei die Stege 13 in Schlitzen 14 des äußeren Mantels 5 angeordnet sind.

Der Werkstoff des Brenngasinjektors besteht aus einem hochwarmfesten Metall bzw. aus einer Metallegierung mit einer Mindestschmelztemperatur von 2 900 °K. Der Werkstoff kann dabei aus 100 % Wolfram oder Molybän oder aus einer Legierung aus Wolfram und Molybdän bestehen.

Bezugszeichenliste
1 Brenngasinjektor
2 Gehäuse
3 Lufteintrittkanal
4 Querschnitt
5 Äußerer Mantel

5.1 Mantelabschnitt
6 Heck
7 Flugkörper
8 Schrägfläche
8.1 Schrägfläche
9 Innerer Mantel
10 Schrägfläche
11 Gehäuseabschnitt
12 Spitze
13 Steg
14 Schlitz
15 Muffe
16 Gewinde
17 Düse
17.1 Düseneingang
17.2 Düsenausgang
18 Gasstrahl
19 Erste Brennkammer
20 Zweite Brennkammer
21 Teil
22 Leitwerk
23 Seiteneinlauf
24 Treibsatz
25 Sekundärluftstrom
26 Brandsatz
a Abstand
h Höhe
$d_1$ Durchmesser
$d_2$ Durchmesser
l Mischungslänge
$m_L$ Luftmassenstrom
$m_G$ Generatorgasmassenstrom

## Patentansprüche

1. Luftatmender Feststoff-Staustrahlantrieb eines Flugkörpers (7) mit einem Einlaufdiffusor (23) und einer am Ende einer ersten Brennkammer (19) befindlichen Düse (17), die einen rückseitig geöffneten Schallquerschnitt aufweist und mit einem sich kegelstumpfförmig aufweitenden sowie zylinderrohrförmig in die zweite Brennkammer (20) hineinragenden, am rückseitigen Ende geöffneten Brenngasinjektor (1) versehen ist, dessen zylinderrohrförmiger Gehäusebereich Mittel zur Luftzufuhr umfaßt, dadurch gekennzeichnet, daß ein äußerer Mantel (5) des Brenngasinjektorgehäuses (2) in einem vorderhälftigen zylinderrohrförmigen Bereich in einem radialen Abstand (a) das heckseitige zylinderrohrförmige Ende des mit der Düse (17) zwischen einem vorderen Düseneingang (17.1) und einem heckseitigen Düsenausgang (17.2) verbundenen und kegelstumpfförmig sich auffaltenden inneren Mantels des Brenngasinjektorgehäuses (2) axial überlappt und einen nach vorn gerichteten, ringförmigen Lufteintrittkanal (3) mit einem dem stöchiometrischen Bedarf der Generatorgase entsprechenden Querschnitt (4) bildet, wobei im überlappten Gehäusebereich der äußere Mantel (5) des Brenngasinjektors (1) an seinem vorderen Ende wenigstens mit einer zum Heck (6) des Flugkörpers (7) hin sich innenseitig einschnürenden, den axialen Lufteinströmimpuls weitgehend aufrecht erhaltenden Schrägfläche (8) versehen ist und das heckseitige Ende des inneren Mantels (9) am Ausgang des Lufteintrittkanales (3) außenseitig eine zum Heck (6) hin den Querschnitt (4) vergrößernde Schrägfläche (10) enthält, sowie die Spitze der Schrägfläche (10) gegenüber dem Düsenausgang (17.2), entsprechend einer axialen Höhe (h) eines an der Düse (17) kegelförmig aufreißenden Gasstrahls (18), heckseitig zurückversetzt ist.

2. Staustrahlantrieb nach Anspruch 1, dadurch gekennzeichnet, daß der äußere Mantel (5) am Ausgang des Lufteintrittkanals (3) mit einer der Schrägfläche (10) gegenüberliegenden zweiten, zum Heck (6) hin sich verjüngenden Schrägfläche (8.1) versehen ist, deren kleinster Durchmesser ($d_2$) dem bis zum heckseitigen Ende des Brenngasinjektors (1) reichenden Gehäuseabschnitt (11) des äußeren Mantels (5) entspricht.

3. Staustrahlantrieb nach Anspruch 1 und 2, dadurch gekennzeichnet, daß die Schrägflächen (8, 8.1, 10) des Brenngasinjektors (1) unter einem gegenüber dem achsparallelen Mantel (5,9) geneigten Winkel α in einem Winkelbereich zwischen 3 und 45° angeordnet sind.

4. Staustrahlantrieb nach einem der Ansprüche 1 bis 3, dadurch gekennzeichnet, daß zur Bildung eines ausschließlich schrägen Lufteintrittkanals (3) der überlappende äußere Gehäusebereich als schräger Mantelabschnitt (5.1) direkt der Schrägfläche (10) gegenüberliegt und unter einem Winkel α geneigt angeordnet ist, wobei die nach vorn gerichtete Mantelabschnittsspitze (12) außenseitig einen achsparallelen Verlauf aufweist.

5. Staustrahlantrieb nach einem der Ansprüche 1 bis 4, dadurch gekennzeichnet, daß der überlappende Bereich des äußeren Mantels (5) über mehrfach auf den Umfang gleichmäßig verteilt angeordnete Stege (13) mit dem inneren Mantel (9) unlösbar verbunden ist.

6. Staustrahlantrieb nach Anspruch 5, dadurch gekennzeichnet, daß die Stege (13) in Schlitzen (14) des äußeren Mantels (5) angeordnet sind.

7. Staustrahlantrieb nach einem der Ansprüche 1 bis 6, dadurch gekennzeichnet, daß der äußere Mantel (5) des Gehäuses (2) aus einem einstückigen an der Schrägfläche (8.1) ausgehalsten Rohr besteht.

8. Staustrahlantrieb nach einem der Ansprüche 1 bis 7, dadurch gekennzeichnet, daß der äußere Mantel (5) des Gehäuses (2) aus einem an den Schrägflächen (8) und (8.1) abgesetzten Rohr besteht.

9. Staustrahlantrieb nach einem der Ansprüche 1 bis 8, dadurch gekennzeichnet, daß der äußere Mantel (5) im überlappenden Bereich als Muffe (15) ausgebildet ist, die am vorderen Ende die Schrägfläche (8) und heckseitig ein Gewinde (16) enthält, wodurch der mit einer Schrägfläche (8.1) versehene heckseitige Gehäuseabschnitt (11) anschraubbar verbunden ist.

10. Staustrahlantrieb nach einem der Ansprüche 1 bis 9, dadurch gekennzeichnet, daß der Werkstoff des Brenngasinjektors (1) aus einem hochwarmfesten Metall bzw. aus einer Metallegierung mit einer Schmelztemperatur größer 2 500 °K besteht.

11. Staustrahlantrieb nach Anspruch 10, dadurch gekennzeichnet, daß das hochwarmfeste Metall aus 100 % Wolfram oder Molybdän oder einer Legierung aus Wolfram und Molybdän besteht.

**Claims**

1. Air-breathing solid-fuel ram jet for a projectile (7) with an inlet diffuser (23) and a nozzle (17) positioned at the end of a first combustion chamber (19) and which has a sonic cross section open at the rear and provided with a combustion gas injector (1) which widens out in the form of a frustum and extends cylindrically into a second combustion chamber (20) of which the cylindrical housing part comprises means for the supply of air, characterised by the fact that an outer casing (5) of a combustion gas injector housing (2) in a cylindrical zone in the front half axially overlaps by a radial distance (a) the rear cylindrical end of the casing of the combustion gas injector housing (2), which casing opens up in the form of a frustum and is connected with the nozzle (17) between a front nozzle inlet (17.1) and a rear nozzle outlet (17.2) and forms an annular air inlet channel (3) directed forwards with a cross section (4) corresponding to the stochiometric requirement of the generator gas, in the overlapped zone of the housing the outer casing (5) of the combustion gas generator (1) is provided at its front end with at least one oblique surface (8) internally constricted towards the tail (6) of the projectile (7) and largely maintaining the axial air inlet impulse, the rear end of the inner casing (9) is provided, on the outside of the outlet of the air inlet channel (3), with an oblique surface (10) which increases the cross section (4) towards the tail (6), the edge of the oblique surface (10) being offset towards the rear in relation to the nozzle outlet (17.2) in accordance with an axial height (h) of a gas jet (18) developing conically on the nozzle.

2. Ram jet in accordance with Claim 1, characterised by the fact that the outer casing (5) is provided, at the outlet of the air inlet channel (3) with an oblique surface (8.1) which is situated opposite the oblique surface (10) and tapers in the direction of the tail (6) and of which the minimum diameter d2 corresponds to that housing section (11) of the outer casing (5) which extends to the rear end of the combustion gas injector (1).

3. Ram jet in accordance with Claim 1 and 2 characterised by the fact that the oblique surfaces (8, 8.1, 10) of the combustion gas injector (1) are situated at an angle (α) inclined in relation to the paraxial casing (5.9) and included in an angular range between 3 and 45°.

4. Ram jet in accordance with one of Claims 1 to 3, characterised by the fact that for the formation of an exclusively oblique air inlet channel (3) the overlapping outer zone of the housing is situated, as an oblique section (5.1) of the casing, directly opposite the oblique surface (10) and slants at an angle (α), while the edge (12) belonging to the casing section and directed forward takes a paraxial course on the outside.

5. Ram jet in accordance with one of Claims 1 to 4, characterised by the fact that the overlapping zone of the outer casing (5) is non-detachably connected to the inner casing (9) through a number of cross pieces (13) evenly distributed over the periphery.

6. Ram jet in accordance with Claim 5, characterised by the fact that the cross pieces (13) are situated in slits (14) of the outer casing (5).

7. Ram jet in accordance with Claims 1 to 6, characterised by the fact that the outer casing (5) of the housing (2) comprises a tube made in one piece and hollowed out on the oblique surface (8.1).

8. Ram jet in accordance with one of Claims 1 to 7, characterised by the fact that the outer casing (5) of the housing (2) consists of a tube offset on the oblique surfaces (8) and (8.1).

9. Ram jet in accordance with one of Claims 1 to 8, characterised by the fact that the outer casing (5) is constructed in the overlapping zone as a sleeve (15) which contains the oblique surface (8) at the front end and a screw threading (16) at the rear end, so that the rear housing section (11) provided with an oblique surface (8.1) can be screwed on.

10. Ram jet in accordance with one of Claims 1 to 9, characterised by the fact that the material of the combustion gas ejector (1) comprises a metal of high thermal resistance or a metal alloy with a melting point of above 2,500 °K.

11. Ram jet in accordance with Claim 10, characterised by the fact that the metal of high thermal resistance comprises 100 % tungsten or molybdenum or an alloy of tungsten of molybdenum.

## Revendications

1. Statoréacteur aérobie à propergol solide d'un missile (7) comportant un diffuseur d'entrée (23) et une tuyère (17) se trouvant à l'extrémité d'une première chambre de combustion (19), qui présente une section sonique ouverte vers l'arrière et est muni d'un injecteur de gaz de combustion (1), ouvert à son extrémité arrière, allant en s'élargissant en forme de tronc de cône, pénétrant sous forme tubulaire cylindrique dans la seconde chambre de combustion (20), dont la zone du boîtier en forme de tube cylindrique comporte des moyens d'admission d'air, caractérisé en ce qu'une enveloppe extérieure (5) du boîtier d'injecteur de gaz de combustion (2), dans une zone de tube cylindrique à demi vers l'avant, à un intervalle radial (a), chevauche axialement l'extrémité tubulaire cylindrique côté arrière de l'enveloppe intérieure du boîtier (2) relié à la tuyère (17) entre une entrée de tuyère (17.1) et une sortie de tuyère (17.2) et se repliant en forme de tronc de cône et forme un canal d'admission d'air (3) annulaire orienté vers l'avant avec une section (4) répondant au besoin stœchiométrique des gaz de générateur, l'enveloppe extérieure (5) de l'injecteur de gaz de combustion (1) étant pourvue, dans la zone en chevauchement du boîtier, à son extrémité antérieure, d'au moins une surface oblique (8) se rétrécissant vers l'intérieur, maintenant dans une large mesure l'impulsion de l'admission d'air axiale et l'extrémité arrière de l'enveloppe intérieure (9) à la sortie du canal d'admission d'air (3) contenant une surface oblique (10) agrandissant vers l'arrière (6) de la section (4), de même que la pointe de la surface oblique (10) est en retrait vers l'arrière, par rapport à la sortie de tuyère (17,2), d'une hauteur axiale (h) d'un jet de gaz (18) jaillissant en forme de cône de la tuyère (17).

2. Statoréacteur selon la revendication 1, caractérisé en ce que l'enveloppe extérieure (5) est pourvue à la sortie du canal d'admission d'air (3) d'une seconde surface oblique (8.1) allant en se rétrécissant vers l'arrière (6) et située à l'opposé de la surface oblique (10), et dont le plus petit diamètre (d2) correspond à la section de boîtier allant croissant de l'enveloppe extérieure (5) jusqu'à l'extrémité arrière de l'injecteur de gaz de combustion (1).

3. Statoréacteur selon les revendications 1 et 2, caractérisé en ce que les surfaces obliques (8, 8.1, 10) de l'injecteur de gaz de combustion (1) sont inclinées par rapport à l'enveloppe à axes parallèles (5, 9), sous un angle α situé dans un domaine angulaire entre 3 et 45°.

4. Statoréacteur selon l'une des revendications 1 à 3, caractérisé en ce que pour la formation d'un canal d'admission d'air (3), exclusivement en biais, la zone de boîtier extérieure en chevauchement est située directement en face de la surface oblique (10), comme section d'enveloppe (5.1) en biais, et est inclinée sous un angle α, la pointe de la section d'enveloppe (12) dirigée vers l'avant présentant du côté extérieur, un développement parallèle à l'axe.

5. Statoréacteur selon l'une des revendications 1 à 4, caractérisé en ce que la zone de chevauchement de l'enveloppe extérieure (5) est reliée de façon fixe à l'enveloppe intérieure (9) au moyen de plusieurs entretoises (13) réparties régulièrement sur la périphérie.

6. Statoréacteur selon la revendication 5, caractérisé en ce que les entretoises (13) sont placées dans des fentes (14) de l'enveloppe extérieure (5).

7. Statoréacteur selon l'une des revendications 1 à 6, caractérisé en ce que l'enveloppe extérieure (5) du boîtier (2) est constituée d'un tube formant un col d'une seule pièce sur la surface inclinée (8.1).

8. Statoréacteur selon l'une des revendications 1 à 7, caractérisé en ce que l'enveloppe extérieure (5) du boîtier (2) est constituée par un tube décalé sur les surfaces obliques (8) et (8.1).

9. Statoréacteur selon l'une des revendications 1 à 8, caractérisé en ce que l'enveloppe extérieure (5) est conformée en un manchon (15) dans la zone de chevauchement qui comporte du côté avant les surfaces obliques (8) et du côté arrière un filetage (16) grâce à quoi la section de boîtier (11) prévue du côté arrière peut être reliée par vissage.

10. Statoréacteur selon l'une des revendications 1 à 9, caractérisé en ce que le matériau de l'injecteur de gaz de combustion (1) est constitué d'un métal ou d'un alliage métallique hautement réfractaire dont la température de fusion est supérieure à 2 500 °K.

11. Statoréacteur selon la revendication 10, caractérisé en ce que le métal hautement réfractaire est constitué à 100 % de tungstène, ou de molybdène ou d'un alliage de tungstène et de molybdène.

# 0 189 545

FIG.1

FIG.2

FIG.3

FIG.4

FIG.7

FIG.5

FIG.8

FIG. 6